# EUROPEAN PATENT APPLICATION

(11) **EP 1 662 703 A1**
(43) Date of publication of application: **31.05.2006**
(21) Application number: 04292819.2
(22) Date of filing: 30.11.2004
(51) Int. Cl.: H04L 12/24, H04L 29/08

(54) **Replacement of DHCP server IP address with relay agent IP address in DHCP message**

(71) Applicant: ALCATEL, 75008 Paris (FR)
(72) Inventor: Gorteman, Dirk L. F., 9310 Baardegem (BE); Janssens, Nico A. A., 9290 Overmere (BE)
(74) Representative: Narmon, Gisèle Marie Thérèse

(57) **Abstract**

Methods for providing internet-layer addresses from serving devices (1) via relaying devices (4) to client devices (3) comprise the steps of, at the relaying devices (4), receiving first messages (101a) from the client devices (3) and second messages (102a) from the serving devices and transmitting further first messages (101b) to the serving devices (1) and further second messages (102b) to the client devices (3). To allow the relaying devices (4) to monitor certain traffic relatively sufficiently, the method is provided with the step of, at the relaying devices (4), inserting internet-layer (internet protocol = layer-3) addresses defining the relaying devices (4) into higher-layer (user datagram protocol=layer-4) fields of the further second messages (102b), which higher-layer fields were originally designed for identifying the serving devices (1). As a result, future messages to be sent from the client devices (3) to the serving devices (1) must pass the relaying devices (4). The higher-layer fields comprise server internet protocol address fields and option-54 fields. The dynamic host configuration protocol messages are discover, offer, request, acknowledge and request and/or renew and/or release messages.

## Description

The invention relates to a method for providing an internet-layer address from a serving device via a relaying device to a client device and comprising the steps of, at the relaying device,
- receiving a first message from the client device and transmitting a further first message to the serving device, which first messages comprise internet-layer addresses and lower-layer addresses; and
- receiving a second message from the serving device and transmitting a further second message to the client device, which second messages comprise internet-layer addresses and lower-layer addresses and higher-layer fields for identifying the serving device.
   Examples of such a serving device are servers, examples of such a relaying device are relays, and examples of such a client device are personal computers and/or modems.
   A prior art method is of common general knowledge and defines a client device to generate a first message for requesting an internet-layer address. A relaying device receives this first message and in response sends a further first message to a serving device, possibly via other relaying devices. The relaying device receives in return a second message from the serving device and in response sends a further second message to the client device for offering the internet-layer address to the client device.
   The first messages comprise internet-layer addresses such as for example source internet-layer addresses and destination internet-layer addresses and comprise lower-layer addresses such as for example source lower-layer addresses and destination lower-layer addresses. The second messages comprise internet-layer addresses such as for example source internet-layer addresses and destination internet-layer addresses and comprise lower-layer addresses such as for example source lower-layer addresses and destination lower-layer addresses and comprise higher-layer fields for identifying the serving device.
   In the further second message, the higher-layer field originally designed for identifying the serving device comprises an internet-layer address defining the serving device.
   The known method is disadvantageous, inter alia, owing to the fact that the relaying device in this method cannot monitor certain traffic relatively sufficiently. The client device is provided with the internet-layer address defining the serving device. As a result, certain future messages to be sent from the client device to the serving device no longer need to pass the relaying device, in which case the relaying device cannot monitor this traffic relatively sufficiently.
   It is an object of the invention, inter alia, to provide a method as defined in the preamble in which method the relaying device can monitor certain traffic relatively sufficiently.
   The method according to the invention is characterized in that the method further comprises the step of, at the relaying device,
- inserting an internet-layer address defining the relaying device into the higher-layer field of the further second message.
   By not inserting the internet-layer address defining the serving device into the higher-layer field of the further second message, which higher-layer field is originally designed for identifying the serving device, but instead of that inserting the internet-layer address defining the relaying device into this higher-layer field of the further second message, future messages to be sent from the client device to the serving device must pass the relaying device. In this case, the relaying device can monitor this traffic relatively sufficiently. The invention is further advantageous in that relaying device can be a stand-alone device which does not need to be able to process at the internet layer or at a higher layer.
   The further second message is either generated by taking the second message and replacing and/or overwriting parts of the second message or is generated by generating a new further second message and copying and/or shifting first parts originating from the second message and inserting second parts. These second parts either do not originate from the second message or do originate from the second message but then originate from different locations and/or are being processed before being inserted.
   It should be noted that US 2002/0023160 discloses in its paragraph 40 that a server is to be configured to ensure that every response that changes an internet-layer address assignment or a lease on an internet-layer address assignment gets relayed to the relay agent. It should further be noted that US 2002/0165972 discloses in its paragraph 10 methods and apparatus for use in reducing traffic over a communication link used by a computer network, including the steps of monitoring, at a gateway, communications involving address assignment between an address-assigning computer device and one or more computer devices and of storing and identifying, at the gateway, computer device identifiers. Both patent applications do however not prevent that certain future messages to be sent from the client device to the serving device will not pass the relaying device and do neither disclose nor suggest to insert the internet-layer address defining the relaying device into the higher-layer field of the further second message originally designed for identifying the serving device.
   An embodiment of the method according to the invention is characterized in that the method further comprises the steps of, at the relaying device,
- receiving a third message from the client device and transmitting a further third message to the serving device, which third messages comprise internet-layer addresses and lower-layer addresses;
- receiving a fourth message from the serving device and transmitting a further fourth message to the client device, which fourth messages comprise internet-layer addresses and lower-layer addresses and higher-layer fields for identifying the serving device; and
- inserting an internet-layer address defining the relaying device into the higher-layer field of the further fourth message.
   In case the protocol defining the first and second messages further requires the third and fourth messages to be exchanged, the higher-layer field of the further fourth message originally designed for identifying the serving device should also be provided with the insertion of internet-layer address defining the relaying device.
   An embodiment of the method according to the invention is characterized in that the method further comprises the steps of, at the client device,
- inserting a destination internet-layer address and a destination lower-layer address both defining the relaying device into a fifth message; and
- transmitting the fifth message to the relaying device;
which fifth message further comprises a source internet-layer address and a source lower-layer address.

In case the protocol defining the first, second, third and fourth messages to be exchanged further requires the fifth message to be exchanged, this fifth message should be provided with an insertion of the destination internet-layer address and the destination lower-layer address both defining the relaying device.

An embodiment of the method according to the invention is characterized in that the method further comprises the steps of, at the relaying device,
- receiving the fifth message from the client device and transmitting a further fifth message to the serving device, which further fifth message comprises internet-layer addresses and lower-layer addresses.

In case the protocol defining the first, second, third, fourth and fifth messages to be exchanged further requires the further fifth message to be exchanged, this further fifth message should be provided with internet-layer addresses and lower-layer addresses.

An embodiment of the method according to the invention is characterized in that the higher-layer field of the further second message comprises a server internet protocol address field and a server identification field, the server identification field comprising the internet-layer address defining the relaying device and the server internet protocol address field comprising the value of the server identification field.

The value of the server identification field as comprised by the server internet protocol address field may be the internet-layer address defining the relaying device or may be a link to the internet-layer address.

An embodiment of the method according to the invention is characterized in that other higher-layer fields of the further second message further comprise a gateway internet protocol address field and a hopcount field, both fields comprising the value zero.

This increases the security of the method, by not giving more information to the client device than necessary.

An embodiment of the method according to the invention is characterized in that the higher-layer field of the further fourth message comprises a server internet protocol address field and a server identification field, the server identification field comprising the internet-layer address defining the relaying device and the server internet protocol address field comprising the value of the server identification field.

Again, the value of the server identification field as comprised by the server internet protocol address field may be the internet-layer address defining the relaying device or may be a link to the internet-layer address defining the relaying device.

An embodiment of the method according to the invention is characterized in that other higher-layer fields of the further fourth message further comprise a gateway internet protocol address field and a hopcount field, both fields comprising the value zero.

Again, this increases the security of the method, by not giving more information to the client device than necessary.

An embodiment of the method according to the invention is characterized in that the messages are dynamic host configuration protocol messages, the first messages being discover messages, the second messages being offer messages, the third messages being request messages, the fourth messages being acknowledge messages and the fifth messages being request and/or renew and/or release messages. The dynamic host configuration protocol is defined in RFCs. The server identification field may then correspond with an option-54 field. Further messages are not to be excluded.

An embodiment of the method according to the invention is characterized in that the internet-layer addresses are internet protocol addresses, the lower-layer addresses are medium access control addresses and the higher-layer fields are user datagram protocol fields.

The internet-layer addresses or the internet protocol addresses are layer-3 addresses, the lower-layer addresses or the medium access control addresses are layer-2 addresses and the higher-layer fields or the user datagram protocol fields are layer-4 fields. The higher-layer fields may refer to fields inside the dynamic host configuration protocol messages. And according to the RFCs the dynamic host configuration protocol messages are packed into a user datagram protocol packet. The user datagram protocol is a layer-4 (= Transport) protocol (according to the OSI Stack defined by ISO). When consulting information on the internet, the dynamic host configuration protocol is considered to be a networking layer protocol (layer-3). This is logical because it configures the networking layer of the clients (by assigning internet protocol addresses).

The invention also relates to a relaying device for providing an internet-layer address from a serving device via the relaying device to a client device and comprising
- a receiver for receiving a first message from the client device and for receiving a second message from the serving device; and
- a transmitter for transmitting a further first message to the serving device and for transmitting a further second message to the client device;
   which first messages comprise internet-layer addresses and lower-layer addresses and which second messages comprise internet-layer addresses and lower-layer addresses and higher-layer fields for identifying the serving device, which relaying device according to the invention is characterized in that the relaying device further comprises
- an inserter for inserting an internet-layer address defining the relaying device into the higher-layer field of the further second message.

The invention yet also relates to a network device comprising a relaying device for providing an internet-layer address from a serving device via the relaying device to a client device and comprising
- a receiver for receiving a first message from the client device and for receiving a second message from the serving device; and
- a transmitter for transmitting a further first message to the serving device and for transmitting a further second message to the client device;
   which first messages comprise internet-layer addresses and lower-layer addresses and which second messages comprise internet-layer addresses and lower-layer addresses and higher-layer fields for identifying the serving device, which network device according to the invention is characterized in that the relaying device further comprises
- an inserter for inserting an internet-layer address defining the relaying device into the higher-layer field of the further second message.

The invention further relates to a client device for receiving an internet-layer address from a serving device via a relaying device and comprising
- a transmitter for transmitting a first message, a third message and a fifth message to the relaying device;
- a receiver for receiving a further second message and a further fourth message from the relaying device;
   which first message comprises internet-layer addresses and lower-layer addresses and which second message comprises internet-layer addresses and lower-layer addresses and higher-layer fields for identifying the serving device and which third message comprises internet-layer addresses and lower-layer addresses and which fourth message comprises internet-layer addresses and lower-layer addresses and higher-layer fields for identifying the serving device and which fifth message comprises internet-layer addresses and lower-layer addresses, which client device according to the invention is characterized in that the client device further comprises
- an inserter for inserting a destination internet-layer address and a destination lower-layer address both defining the relaying device into the fifth message.

The invention yet further relates to a processor program product for providing an internet-layer address from a serving device via a relaying device to a client device and comprising the functions of, at the relaying device,
- receiving a first message from the client device and transmitting a further first message to the serving device, which first messages comprise internet-layer addresses and lower-layer addresses; and
- receiving a second message from the serving device and transmitting a further second message to the client device, which second messages comprise internet-layer addresses and lower-layer addresses and higher-layer fields for identifying the serving device;
   which processor program product according to the invention is characterized in that the processor program product further comprises the function of, at the relaying device,
- inserting an internet-layer address defining the relaying device into the higher-layer field of the further second message.

Embodiments of the relaying device according to the invention and of the network device according to the invention and of the client device according to the invention and of the processor program product according to the invention correspond with the embodiments of the method according to the invention.

The invention is based upon an insight, inter alia, that future messages to be sent from the client device to the serving device must pass the relaying device to allow this relaying device to monitor this traffic relatively sufficiently, and is based upon a basic idea, inter alia, that not the internet-layer address defining the serving device is to be inserted into the higher-layer field of the further second message, which higher-layer field is originally designed for identifying the serving device, but instead of that the internet-layer address defining the relaying device is to be inserted into this higher-layer field of the further second message.

The invention solves the problem, inter alia, to provide a method in which method the relaying device can monitor certain traffic relatively sufficiently, and is further advantageous, inter alia, in that the relaying device can be a stand-alone device which does not need to be able to process at the internet layer or at a higher layer, it for example only needs to be able to process dynamic host configuration protocol messages.

These and other aspects of the invention will be apparent from and elucidated with reference to the embodiments(s) described hereinafter.
Fig. 1 shows diagrammatically a network with a network device according to the invention comprising a relaying device according to the invention and coupled to a client device according to the invention,
Fig. 2 shows diagrammatically a network with a network device and with a relaying device according to the invention and coupled to a client device according to the invention,
Fig. 3 shows diagrammatically a network with a network device according to the invention comprising a relaying device according to the invention and coupled to a client device according to the invention and coupled to a further network device,
Fig. 4 shows diagrammatically a network with a network device and with a relaying device according to the invention and coupled to a client device according to the invention and coupled to a further network device,
Fig. 5 shows diagrammatically a relaying device according to the invention in greater detail,
Fig. 6 shows diagrammatically a client device according to the invention in greater detail, and
Fig. 7 shows messages to be exchanged in accordance with a method according to the invention.

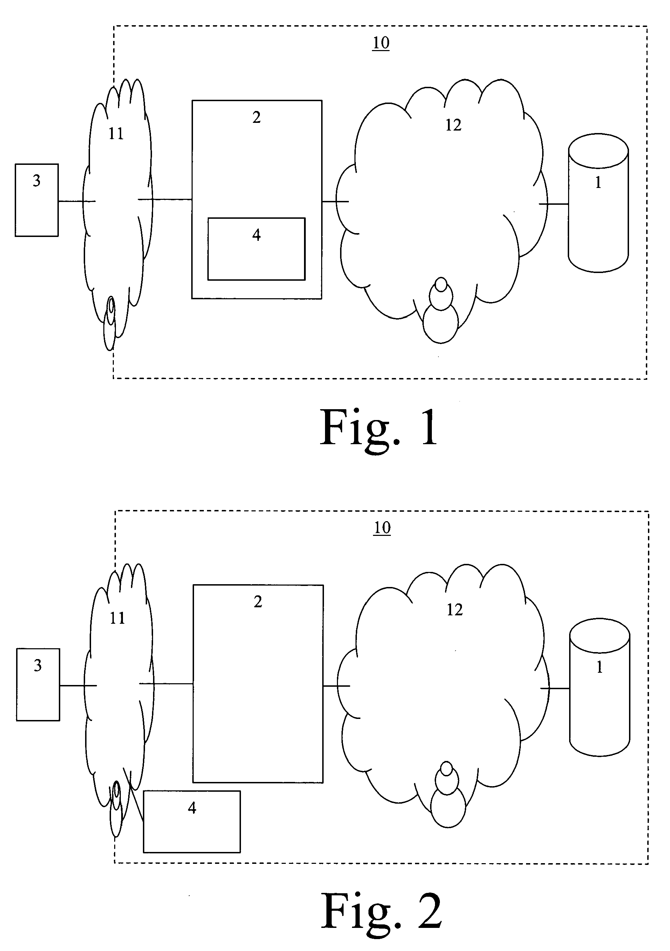

The network 10 shown in Fig. 1 comprises a serving device 1 such as for example a server coupled via for example an internet protocol network 12 to a network device 2 according to the invention such as for example a router comprising a relaying device 4 according to the invention. The network device 2 is coupled via for example a local area network 11 such as an Ethernet network to a client device 3 such as for example a personal computer or a modem and also known as a customer premises equipment or a host. The server for example comprises a dynamic host configuration server and the client device for example comprises a dynamic host configuration client device.

The network 10 shown in Fig. 2 corresponds with the network 10 shown in Fig. 1 apart from the fact that the relaying device 4 is now located outside the network device 2 and is coupled to the network device 2 and to the client device 3 via for example the local area network 11.

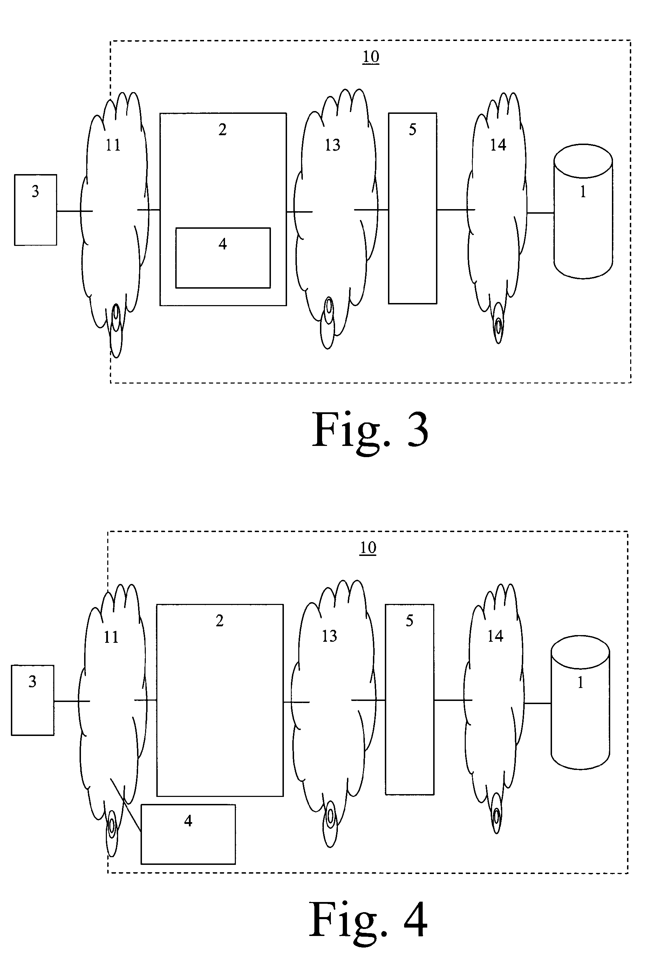

The network 10 shown in Fig. 3 comprises a serving device 1 such as for example a server coupled via for example an internet protocol network 14 to a further network device 5 such as for example a router. The further network device 5 is coupled via for example an Ethernet network 13 to a network device 2 according to the invention such as for example a bridge comprising a relaying device 4 according to the invention. The network device 2 is coupled via for example a local area network 11 such as an Ethernet network to a client device 3 such as for example a personal computer or a modem and also known as a customer premises equipment or a host. The server for example comprises a dynamic host configuration server and the client device for example comprises a dynamic host configuration client device.

The network 10 shown in Fig. 4 corresponds with the network 10 shown in Fig. 3 apart from the fact that the relaying device 4 is now located outside the network device 2 and is coupled to the network device 2 and to the client device 3 via for example the local area network 11.

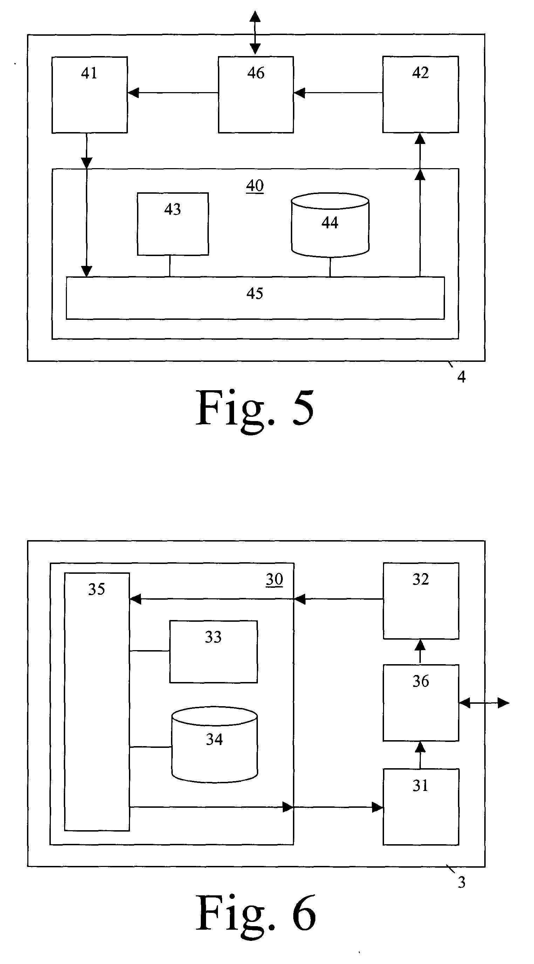

The relaying device 4 according to the invention shown in greater detail in Fig. 5 comprises a receiver 41 for receiving a first message 101 a from the client device 3 and for receiving a second message 102a from the serving device 1 and for receiving a third message 103a from the client device 3 and for receiving a fourth message 104a from the serving device 1 and for receiving a fifth message 105a from the client device 3. The relaying device 4 further comprises a transmitter 42 for transmitting a further first message 101b to the serving device 4 and for transmitting a further second message 102b to the client device 3 and for transmitting a further third message 103b to the serving device and for transmitting a further fourth message 104b to the client device 3 and for transmitting a further fifth message 105b to the serving device 1. An input of the receiver 41 is coupled to an output of an interface 46, of which an in/output is coupled to the network device 2 possible via the local area network 11 and of which an input is coupled to an output of the transmitter 42. An output of the receiver 41 and an input of the transmitter 42 are coupled to a processing system 40, which comprises a processor 45 further coupled to an inserter 43 and to a memory 44.

The client device 3 according to the invention shown in greater detail in Fig. 6 comprises a transmitter 31 for transmitting a first message 101a, a third message 103a and a fifth message 105a to the relaying device 4 and a receiver 32 for receiving a further second message 102b and a further fourth message 104b from the relaying device 4. An input of the receiver 32 is coupled to an output of an interface 36, of which an in/output is coupled to the local area network 11 and of which an input is coupled to an output of the transmitter 31. An output of the receiver 32 and an input of the transmitter 31 are coupled to a processing system 30, which comprises a processor 35 further coupled to an inserter 33 and to a memory 34.

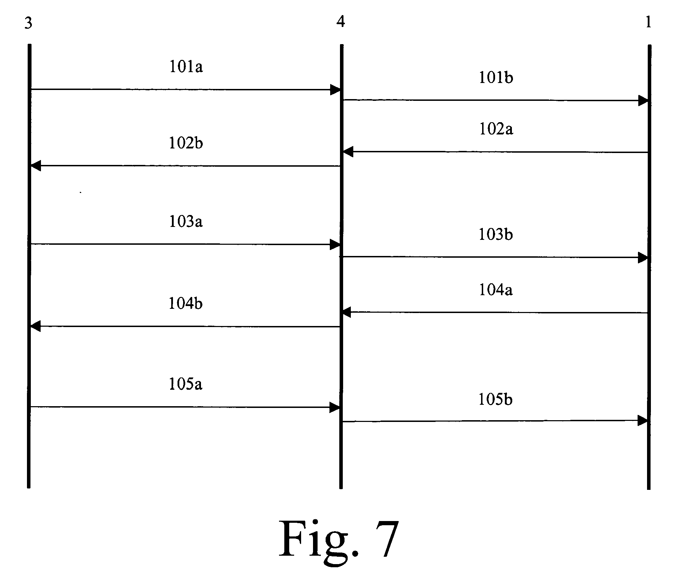

The dynamic host configuration protocol messages to be exchanged in accordance with a method according to the invention are shown in Fig. 7. The first message 101a is for example a discover message defining (at layer-2) source Mac@ = ClientMac@ and destination Mac@ = ff:ff:ff:ff:ff:ff and (at layer-3) source IP = 0.0.0.0 and destination IP = 255.255.255.255 and gateway IP address giaddr = 0. The further first message 101b is for example a discover message defining (at layer-2) source Mac@ = RelayMac@ and destination Mac@ = ServerMac@ and (at layer-3) source IP = relayIP@ and destination IP = ServerIP@ and gateway IP address giaddr = relayIP@. The second message 102a is for example an offer message defining (at layer-2) source Mac@ = ServerMac@ and destination Mac@ = RelayMac@ and (at layer-3) source IP = ServerIP@ and destination IP = relayIP@ and gateway IP address giaddr = relayIP@ and option-54 = Server IP@. The further second message 102b is for example an offer message defining (at layer-2) source Mac@ = RelayMac@ and destination Mac@ = UserMac@ or ff:ff:ff:ff:ff:ff and (at layer-3) source IP = relayIP@ and destination IP = 255.255.255.255 or your IP address yiaddr and gateway IP address giaddr = 0 and hopcount = 0 and server IP address siaddr = option-54 = Relay IP@.

The third message 103a is for example a request message defining (at layer-2) source Mac@ = ClientMac@ and destination Mac@ = ff:ff:ff:ff:ff:ff and (at layer-3) source IP = 0.0.0.0 and destination IP = 255.255.255.255 and gateway IP address giaddr = 0. The further third message 103b is for example a request message defining (at layer-2) source Mac@ = RelayMac@ and destination Mac@ = ServerMac@ and (at layer-3) source IP = relayIP@ and destination IP = ServerIP@ and gateway IP address giaddr = relayIP@. The fourth message 104a is for example an acknowledge message defining (at layer-2) source Mac@ = ServerMac@ and destination Mac@ = RelayMac@ and (at layer-3) source IP = ServerIP@ and destination IP = relayIP@ and gateway IP address giaddr = relayIP@ and option-54 = Server IP@. The further fourth message 104b is for example an acknowledge message defining (at layer-2) source Mac@ = RelayMac@ and destination Mac@ = UserMac@ or ff:ff:ff:ff:ff:ff and (at layer-3) source IP = relayIP@ and destination IP = 255.255.255.255 or your IP address yiaddr and gateway IP address giaddr = 0 and hopcount = 0 and server IP address siaddr = option-54 = relayIP@. The fifth message 105a is for example a request, a renew and/or a release message defining (at layer-2) source Mac@ = ClientMac@ and destination Mac@ = RelayMac@ and (at layer-3) source IP = ClientIP@ and destination IP = relayIP@ and gateway IP address giaddr = 0.

The internet-layer addresses or the internet protocol addresses IP@ are layer-3 addresses, the lower-layer addresses or the medium access control addresses Mac@ are layer-2 addresses and the higher-layer fields or the user datagram protocol fields siaddr and option-54 and giaddr and hopcount are layer-4 fields.

In a prior art situation, the further second message 102b, the further fourth message 104b and the fifth message 105a look different. The further second message 102b and the further fourth message 104b do not define that (at layer-4) gateway IP address giaddr = 0 and hopcount = 0 and server IP address siaddr = option-54 = relayIP@, but define (at layer-4) gateway IP address giaddr = RelayIP@ and hopcount >0 and option-54 = ServerIP@. And the fifth message 105a does not define (at layer-2) destination Mac@ = RelayMac@ and (at layer-3) destination IP = relayIP@ but defines (at layer-2) destination Mac@ = RouterMac@ and (at layer-3) destination IP = ServerIP@. As a result, the fifth message 105a and following messages to be sent from the client device 3 to the serving device 1 no longer need to pass the relaying device 4, in which case the relaying device 4 cannot monitor this traffic relatively sufficiently.

According to the invention, the further second message 102b, the further fourth message 104b and the fifth message 105 are as described for Fig. 7. As a result, by - compared to the prior art situation discussed above - not inserting the internet-layer address defining the serving device 1 ServerIP@ into the higher-layer field option-54 of the further second message 102b and the further fourth message 104b, which higher-layer field server IP address siaddr = option-54 is originally designed for identifying the serving device 1 ServerIP@, but instead of that inserting the internet-layer address defining the relaying device 4 relayIP@ into this higher-layer field server IP address siaddr = option-54 of the further second message 102b and the further fourth message 104b, future messages such as the fifth message 105a and folowing messages to be sent from the client device 3 to the serving device 1 must pass the relaying device 4. In this case, the relaying device 4 can monitor this traffic relatively sufficiently. The invention is further advantageous in that relaying device 4 can be a stand-alone device which does not need to be able to process at the internet layer or at the higher layer. The fifth message 105a defines according to the invention (at layer-2) destination Mac@ = RelayMac@ and (at layer-3) destination IP = relayIP@.

To realise the invention, in other words to change the further second message 102b, the further fourth message 104b and the fifth message 105a as described for Fig. 7, the relaying device 4 and the client device 3 respectively need to be provided with the inserters 43 and 33 respectively. At the relaying device 4, incoming second (fourth) messages 102a (104a) arrive via the interface 46 and are received via the receiver 41 and are detected via a detector not shown but for example forming part of the processor 45. In response the further second (further fourth) messages 102b (104b) are generated by, inter alia, inserting the internet-layer address defining the relaying device 4 into the higher-layer field of the further second (further fourth) message 102b (104b). These insertions are done via the inserter 43. Then the further second (further fourth) messages 102b (104b) are supplied to the transmitter 42 for being transmitted via the interface 46. At the client device 3, incoming further fourth messages 104b arrive via the interface 36 and are received via the receiver 32 and are detected via a detector not shown but for example forming part of the processor 35. In response the fifth messages 105a are generated by, inter alia, inserting the destination internet-layer address and the destination lower-layer address both defining the relaying device 4 into the fifth messages 105a. Then the fifth messages 105a are supplied to the transmitter 31 for being transmitted via the interface 36.

The addresses and fields at layer-2, layer-3 and layer-4 are just examples and the layers are just examples. In a minimum situation, an internet-layer and a higher-layer will be involved. The dynamic host configuration protocol messages are just examples, for other protocols other and more or less (kinds of) messages may be used. In a minimum situation, the first and second messages will be present. Therefore, the higher-layer field for example comprises giaddr and option-54 without excluding other higher-layer fields. And siaddr and hopcount are just preferred further fields to be filled with zero's to increase the security of the method, by not giving more information to the client device 3 than necessary.

The Figures 1-4 are just possible embodiments without excluding other network constructions and other device constructions. For example, more than one relaying device 4 may be present between the client device 3 and the serving device 1 and more and other network devices may be present between the client device 3 and the serving device 1. The Figures 5-6 are just possible embodiments without excluding other device constructions. For example, the inserters 33,43 may be integrated into the processors 35,45, and the receivers 32,41 and the transmitters 31,42 may be integrated into the interfaces 36,46 or into the processor systems 30,40. The interfaces 36,46 may comprise filters, amplifiers, buffers, switches and may be based on the shown bidirectional incoming and outgoing couplings or may be alternatively based on separate unidirectional incoming and unidirectional outgoing couplings.

The expression "for" in for example "for providing", "for identifying", "for receiving", "for transmitting" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps/functions of receiving, transmitting, inserting etc. do not exclude further steps, like for example, inter alia, the steps/functions as described for the Figures.

## Claims

1. Method for providing an internet-layer address from a serving device (1) via a relaying device (4) to a client device (3) and comprising the steps of, at the relaying device (4),
- receiving a first message (101a) from the client device (3) and transmitting a further first message (101b) to the serving device (1), which first messages comprise internet-layer addresses and lower-layer addresses; and
- receiving a second message (102a) from the serving device (1) and transmitting a further second message (102b) to the client device (3), which second messages comprise internet-layer addresses and lower-layer addresses and higher-layer fields for identifying the serving device (1);
**characterized in that** the method further comprises the step of, at the relaying device (4),
- inserting an internet-layer address defining the relaying device (4) into the higher-layer field of the further second message (102b).

2. Method as defined in claim 1, **characterized in that** the method further comprises the steps of, at the relaying device (4),
- receiving a third message (103a) from the client device (3) and transmitting a further third message (103b) to the serving device (1), which third messages comprise internet-layer addresses and lower-layer addresses;
- receiving a fourth message (104a) from the serving device (1) and transmitting a further fourth message (104b) to the client device (3), which fourth messages comprise internet-layer addresses and lower-layer addresses and higher-layer fields for identifying the serving device (1); and
- inserting an internet-layer address defining the relaying device (4) into the higher-layer field of the further fourth message (104b).

3. Method as defined in claim 2, **characterized in that** the method further comprises the steps of, at the client device (3),
- inserting a destination internet-layer address and a destination lower-layer address both defining the relaying device into a fifth message (105a); and
- transmitting the fifth message (105a) to the relaying device (4);
which fifth message (105a) further comprises a source internet-layer address and a source lower-layer address.

4. Method as defined in claim 3, **characterized in that** the method further comprises the steps of, at the relaying device (4),
- receiving the fifth message (105a) from the client device (3) and transmitting a further fifth message (105b) to the serving device (1), which further fifth message (105b) comprises internet-layer addresses and lower-layer addresses.

5. Method as defined in claim 1, **characterized in that** the higher-layer field of the further second message (102b) comprises a server internet protocol address field and a server identification field, the server identification field comprising the internet-layer address defining the relaying device (4) and the server internet protocol address field comprising the value of the server identification field.

6. Method as defined in claim 5, **characterized in that** other higher-layer fields of the further second message (102b) further comprise a gateway internet protocol address field and a hopcount field, both fields comprising the value zero.

7. Method as defined in claim 2, **characterized in that** the higher-layer field of the further fourth message (104b) comprises a server internet protocol address field and a server identification field, the server identification field comprising the internet-layer address defining the relaying device (4) and the server internet protocol address field comprising the value of the server identification field.

8. Method as defined in claim 7, **characterized in that** other higher-layer fields of the further fourth message (104b) further comprise a gateway internet protocol address field and a hopcount field, both fields comprising the value zero.

9. Method as defined in claim 3 or 4, **characterized in that** the messages are dynamic host configuration protocol messages, the first messages being discover messages, the second messages being offer messages, the third messages being request messages, the fourth messages being acknowledge messages and the fifth messages being request and/or renew and/or release messages.

10. Method as defined in claim 1, **characterized in that** the internet-layer addresses are internet protocol addresses, the lower-layer addresses are medium access control addresses and the higher-layer fields are user datagram protocol fields.

11. Relaying device (4) for providing an internet-layer address from a serving device (1) via the relaying device (4) to a client device (3) and comprising
- a receiver (41) for receiving a first message (101a) from the client device (3) and for receiving a second message (102a) from the serving device (1); and
- a transmitter (42) for transmitting a further first message (101b) to the serving device (4) and for transmitting a further second message (102b) to the client device (3);
which first messages comprise internet-layer addresses and lower-layer addresses and which second messages comprise internet-layer addresses and lower-layer addresses and higher-layer fields for identifying the serving device (1), **characterized in that** the relaying device (4) further comprises
- an inserter (43) for inserting an internet-layer address defining the relaying device (4) into the higher-layer field of the further second message.

12. Network device (2) comprising a relaying device (4) for providing an internet-layer address from a serving device (1) via the relaying device (4) to a client device (3) and comprising
- a receiver (41) for receiving a first message (101a) from the client device (3) and for receiving a second message (102a) from the serving device (1); and
- a transmitter (42) for transmitting a further first message (101b) to the serving device (4) and for transmitting a further second message (102b) to the client device (3);
which first messages comprise internet-layer addresses and lower-layer addresses and which second messages comprise internet-layer addresses and lower-layer addresses and higher-layer fields for identifying the serving device (1), **characterized in that** the relaying device (4) further comprises
- an inserter (43) for inserting an internet-layer address defining the relaying device (4) into the higher-layer field of the further second message.

13. Client device (3) for receiving an internet-layer address from a serving device (1) via a relaying device (4) and comprising
- a transmitter (31) for transmitting a first message (101a), a third message (103a) and a fifth message (105a) to the relaying device (4);
- a receiver (32) for receiving a further second message (102b) and a further fourth message (104b) from the relaying device (4);
which first message comprises internet-layer addresses and lower-layer addresses and which second message comprises internet-layer addresses and lower-layer addresses and higher-layer fields for identifying the serving device (4) and which third message comprises internet-layer addresses and lower-layer addresses and which fourth message comprises internet-layer addresses and lower-layer addresses and higher-layer fields for identifying the serving device (4) and which fifth message comprises internet-layer addresses and lower-layer addresses, **characterized in that** the client device (3) further comprises
- an inserter (33) for inserting a destination internet-layer address and a destination lower-layer address both defining the relaying device (4) into the fifth message (105a).

14. Processor program product for providing an internet-layer address from a serving device (1) via a relaying device (4) to a client device (3) and comprising the functions of, at the relaying device (4),
- receiving a first message (101a) from the client device (3) and transmitting a further first message (101b) to the serving device (1), which first messages comprise internet-layer addresses and lower-layer addresses; and
- receiving a second message (102a) from the serving device (1) and transmitting a further second message (102b) to the client device (3), which second messages comprise internet-layer addresses and lower-layer addresses and higher-layer fields for identifying the serving device (1);
**characterized in that** the processor program product further comprises the function of, at the relaying device (4),
- inserting an internet-layer address defining the relaying device (4) into the higher-layer field of the further second message (102b).
